# EUROPÄISCHE PATENTANMELDUNG

(11) **EP 4 390 224 A1**
(43) Veröffentlichungstag der Anmeldung: **26.06.2024**
(21) Anmeldenummer: 23209348.4
(22) Anmeldetag: 13.11.2023
(51) Int. Cl.: F23N 5/08, G01J 1/58

(54) **FLAMMENÜBERWACHUNGSVORRICHTUNG FÜR EIN HEIZGERÄT**

(30) Priorität: 19.12.2022 DE 102022213891
(71) Anmelder: Robert Bosch GmbH, 70442 Stuttgart (DE)
(72) Erfinder: Ramsteiner, Ingo, 76275 Ettlingen (DE)

(57) **Zusammenfassung**

Die Erfindung geht aus von einer Überwachungsvorrichtung (100) zum Überwachen einer Flamme (2), die in einem Brennraum (5) eines mit einem Brenngas/Luft-Gemisch gefeuerten Heizgerätes brennt. Bei dem Brenngas kann es sich insbesondere um ein wasserstoffhaltiges Brenngas handeln. Es wird vorgeschlagen, die Überwachungsvorrichtung (100) mit einem Fluoreszenzkörper (102) auszustatten, der in einem Sichtbereich der Flamme (2) angeordnet ist und eine plattenförmige oder stabförmige Gestalt aufweist. Bei brennender Flamme (2) entsteht aufgrund eines von der Flamme (2) emittierten Flammenlichts (3) im und/oder am Fluoreszenzkörper (102) ein Fluoreszenzlicht (4), für das der Fluoreszenzkörper (102) zumindest teilweise transparent ist. Der Fluoreszenzkörper (102) weist zumindest eine große Außenfläche (104) sowie zumindest eine kleine Außenfläche (106) auf, wobei die kleine Außenfläche (106) kleiner als die große Außenfläche (104) ist und an die große Außenfläche (104) angrenzt. Die große Außenfläche (104) ist der Flamme (2) und/oder dem Brennraum (5) zugewandt, und die kleine Außenfläche (106) ist einem optischen Sensor (110) zum Erfassen zumindest einer optischen Eigenschaft des Fluoreszenzlichts (4) zugewandt.

## Beschreibung

### Stand der Technik

Aus dem Stand der Technik sind Überwachungsvorrichtungen zum Beobachten und/oder Überwachen von Flammen in Heizgeräten bekannt. Die meisten Verfahren wurden zur Beobachtung von kohlenwasserstoffhaltigen Brenngasen konzipiert und optimiert. Wasserstoff und wasserstoffhaltige Brenngase stellen neue Anforderungen, die von den etablierten Verfahren nicht oder nur unzureichend erfüllt werden. Besondere Bedeutung wird in der kommenden Generation von wasserstofftauglichen Heizgeräten optischen Überwachungsverfahren beigemessen. Eine Herausforderung ist dabei, dass eine Wasserstoffflamme kaum Licht im sichtbaren Spektralbereich, dafür aber viel Licht im ultravioletten Spektralbereich (UV; bei etwa 310 Nanometern) emittiert. Es existieren Detektortechnologien für diesen UV-Bereich, diese sind aber deutlich teurer als einfache Detektoren wie beispielsweise Fotodioden.

Die DE102021100756 A1 diskutiert diesen Sachverhalt und lehrt ein Verfahren und eine Anordnung zur Überwachung der Flamme mittels eines fluoreszenzbasierten Ansatzes. Hierbei wird eine fluoreszierende Schicht auf einer durch die Flamme angestrahlten Fläche angeordnet, die das UV-Licht absorbiert und Fluoreszenzlicht im sichtbaren oder infraroten Spektralbereich abstrahlt, das dann mit einem Sensor beobachtet werden kann.

Es ist Aufgabe der Erfindung, eine verbesserte Überwachungsvorrichtung bereitzustellen.

### Offenbarung der Erfindung

Die Erfindung geht aus von einer Überwachungsvorrichtung zum Überwachen einer Flamme, die in einem Brennraum eines mit einem Brenngas/Luft-Gemisch gefeuerten Heizgerätes brennt. Bei dem Brenngas kann es sich insbesondere um ein wasserstoffhaltiges Brenngas handeln.

Es wird vorgeschlagen, die Überwachungsvorrichtung mit einem Fluoreszenzkörper auszustatten, der in einem Sichtbereich der Flamme angeordnet ist und eine plattenförmige oder stabförmige Gestalt aufweist. Bei brennender Flamme entsteht aufgrund eines von der Flamme emittierten Flammenlichts im und/oder am Fluoreszenzkörper ein Fluoreszenzlicht, für das der Fluoreszenzkörper zumindest teilweise transparent ist. Der Fluoreszenzkörper weist zumindest eine große Außenfläche sowie zumindest eine kleine Außenfläche auf, wobei die kleine Außenfläche kleiner als die große Außenfläche ist und an die große Außenfläche angrenzt. Die große Außenfläche ist der Flamme und/oder dem Brennraum zugewandt, und die kleine Außenfläche ist einem optischen Sensor zum Erfassen zumindest einer optischen Eigenschaft des Fluoreszenzlichts zugewandt.

Unter einem wasserstoffhaltigen Brenngas soll in diesem Zusammenhang insbesondere ein brennbares Gas verstanden werden, das eine Teilmenge an Wasserstoff umfasst; eine andere Teilmenge kann ein weiteres brennbares Gas - insbesondere ein kohlenwasserstoffhaltiges Brenngas - oder ein inertes Gas sein. Alternativ kann das wasserstoffhaltige Brenngas, insbesondere im Wesentlichen, vollständig aus Wasserstoff bestehen. Unter einem Brennraum soll hier insbesondere der Ort verstanden werden, wo die Flamme brennt. Unter einer Flamme soll hier insbesondere eine Flamme einer Verbrennung eines teilvorgemischten oder vollvorgemischten Brenngas/Luft-Gemisches verstanden werden. Alternativ kann die Flamme eine Diffusionsflamme sein. Bei der Flamme kann es sich beispielsweise um eine Einzelflamme an einer Brennerdüse oder um einen Flammenteppich eines Flächenbrenners eines Heizgerätes handeln. Der Brennraum kann eine mittels Brennkammerwänden von einer Umgebung abgetrennte Brennkammer sein. Alternativ kann der Brennraum auch eine frei brennende Flamme aufweisen und über keine Wände verfügen. Unter einer Überwachungsvorrichtung soll hier insbesondere eine Vorrichtung zum Überwachen der Flamme und/oder einer Flammeneigenschaft und/oder Verbrennungseigenschaft verstanden werden. Überwachen soll insbesondere ein Erkennen und/oder Beobachten und/oder Nachweisen und/oder Messen und/oder Bereitstellen einer Information bedeuten. Die Überwachungsvorrichtung kann - insbesondere zumindest teilweise - außerhalb und/oder innerhalb des Brennraums und/oder der Brennkammer angeordnet sein. Unter einer Flammeneigenschaft und/oder Verbrennungseigenschaft soll hier insbesondere eine qualitative und/oder quantifizierbare Eigenschaft der Flamme beziehungsweise der Verbrennung verstanden werden, anhand der auf eine Existenz der Flamme und/oder eine Qualität der Verbrennung, beispielsweise Mengenverhältnisse im Brenngas/Luft-Gemisch betreffend, zurückgeschlossen werden kann. Unter einem Sichtbereich der Flamme soll hier insbesondere ein einem Flammenlicht ausgesetzter geometrischer Bereich verstanden werden, von dem aus die Flamme direkt oder indirekt, beispielsweise durch eine Öffnung und/oder ein für UV-Licht transparentes Sichtfenster und/oder auf dem Umweg über eine Reflexion oder Spiegelung, nach den Grundsätzen der geometrischen Optik gesehen werden kann. Unter einer von der Flamme emittierten Strahlung soll hier insbesondere ein Flammenlicht im ultravioletten (UV) und/oder sichtbaren und/oder infraroten (IR) Spektralbereich verstanden werden. Das Flammenlicht transportiert, beispielsweise anhand von Intensität, Farbe, Phasenlage und/oder deren zeitlicher Schwankungen, Informationen über die Flammeneigenschaften und/oder Verbrennungseigenschaften. Das Licht kann unter anderem nach seiner Wellenlänge unterschieden werden, wobei die Wellenlänge insbesondere von den Bestandteilen des Brenngas/Luft-Gemischs abhängt. Unter einem Fluoreszenzkörper soll hier insbesondere ein fluoreszierender Festkörper verstanden werden, der nach der Anregung durch Licht, insbesondere durch von der Flamme emittierte Strahlung, aufgrund von Fluoreszenz mit der Emission von Fluoreszenzlicht reagiert. Unter einem Fluoreszenzkörper kann hier insbesondere ein ein fluoreszierendes Material aufweisender Fluoreszenzkörper verstanden werden. Wenn die Überwachungsvorrichtung und/oder der Fluoreszenzkörper außerhalb des Brennraums angeordnet ist, so sinken die thermischen Anforderungen an das Material des Fluoreszenzkörpers beträchtlich. Unter Fluoreszenzlicht soll hier insbesondere Licht im ultravioletten UV-A- und/oder im sichtbaren und/oder im nahinfraroten (NIR) Spektralbereich verstanden werden, das im Fluoreszenzkörper aufgrund von Fluoreszenz entsteht. Das Fluoreszenzlicht basiert auf dem Flammenlicht und gibt - als dessen Abbild - die Informationen aus dem Flammenlicht über die Flammeneigenschaften und/oder Verbrennungseigenschaften wieder Das Fluoreszenzlicht ist insbesondere langwelliger als das Flammenlicht. Unter einer plattenförmigen Gestalt soll hier insbesondere eine flache und/oder scheibenförmige und/oder, insbesondere im Wesentlichen, quaderförmige und/oder, insbesondere im Wesentlichen, prismatische Geometrie des Fluoreszenzkörpers verstanden werden, deren Länge und Breite deutlich größer als ihre Dicke ist. Unter einer stabförmigen Gestalt soll hier insbesondere eine längliche und/oder stiftförmige und/oder, insbesondere im Wesentlichen, quaderförmige und/oder, insbesondere im Wesentlichen, prismatische Geometrie des Fluoreszenzkörpers verstanden werden, deren Länge deutlich größer als ihre Breite und Dicke ist. Unter Transparenz soll hier optische Transparenz und insbesondere die Eigenschaft des Fluoreszenzkörpers verstanden werden, für Licht optisch durchlässig zu sein. Unter teilweiser Transparenz soll hier insbesondere die Eigenschaft des Fluoreszenzkörpers verstanden werden, für Licht eines bestimmten Spektralbereichs optisch durchlässig zu sein. Unter einer Außenfläche soll hier insbesondere eine, vorzugsweise ebene, Oberfläche verstanden werden, die ein Fluoreszenzkörperinneres gegenüber seiner äußeren Umgebung abgrenzt. Unter einer großen Außenfläche soll hier insbesondere eine Außenfläche mit den Abmessungen von der oben genannten Länge mal der Breite verstanden werden. Unter einer kleinen Außenfläche soll hier insbesondere ein Außenfläche mit den Abmessungen von der oben genannten Breite mal der Dicke verstanden werden. Darunter, dass eine Außenfläche an eine andere Außenfläche angrenzt, soll hier verstanden werden, dass die beiden Außenflächen sich an einer gemeinsamen Kante berühren und zueinander benachbart sind, also insbesondere nicht einander gegenüber liegen. Darunter, dass die große Außenfläche der Flamme zugewandt ist, kann hier insbesondere verstanden werden, dass die große Außenfläche dem Brennraum zugewandt ist. Darunter, dass eine Außenfläche einem Gegenstand und/oder einem Ort zugewandt ist, kann hier insbesondere verstanden werden, dass es eine zur Außenfläche senkrechte Verbindungslinie von dem Gegenstand auf die Außenfläche gibt. Die große Außenfläche deckt einen großen Raumwinkel in Bezug auf die Flamme ab und nimmt entsprechend viel Flammenlicht auf. Darunter, dass die kleine Außenfläche einem optischen Sensor zugewandt ist, kann insbesondere auch verstanden werde, dass der optische Sensor in der Nähe der die kleine Außenfläche begrenzenden Kanten angeordnet ist. So kann der optische Sensor Fluoreszenzlicht, das an der kleinen Außenfläche und/oder an den Kanten der kleinen Außenfläche aus dem Fluoreszenzkörper austritt, aufnehmen. Unter einem optischen Sensor soll hier insbesondere ein Sensor zum Erkennen und/oder Beobachten und/oder Nachweisen und/oder Detektieren und/oder Messen einer optischen Eigenschaft und/oder Bereitstellen einer Information über eine optische Eigenschaft des Fluoreszenzlichts verstanden werden. Bei dem optischen Sensor kann es sich insbesondere um eine Fotodiode, eine Fotozelle, einen Strahlungssensor oder einen CMOS- oder CCD-Sensor handeln. Unter einer Detektorfläche des optischen Sensors soll hier insbesondere eine Messfläche verstanden werden, an der das Fluoreszenzlicht am optischen Sensor eingeht und detektiert wird. Unter einer optischen Eigenschaft soll hier insbesondere eine qualitative und/oder quantifizierbare Eigenschaft des Fluoreszenzlichts verstanden werden, beispielsweise eine Existenz und/oder eine Intensität und/oder ein Überschreiten eines Intensitätsgrenzwertes und/oder eine Frequenz des Fluoreszenzlichts betreffend.

Mittels der erfindungsgemäßen Ausgestaltung können Flammen aus einer Brenngas/Luft-Verbrennung, insbesondere mit wasserstoffhaltigen Brenngasen, mit einfachen und kostengünstigen Mitteln erkannt und ausgewertet werden. Gegenüber einer direkten Detektion von UV-Licht ist die Kosteneinsparung von Vorteil.

Mittels der Überwachungsvorrichtung, speziell mittels des Fluoreszenzkörpers, kann insbesondere eine im Vergleich zu einer Detektorfläche des optischen Sensors deutlich größere Fläche abgedeckt und beobachtet werden, wodurch das Prinzip robuster gegenüber lokalen Verschmutzungen wird. Ist wie oben beschrieben die der Flamme zugewandte Außenfläche um ein Mehrfaches größer als die Detektorfläche, wird das erzeugte Fluoreszenzlicht zudem auf den Detektor konzentriert, was zusätzlich die Empfindlichkeit verbessert.

Bei einer bevorzugten Ausgestaltung der Erfindung ist der optische Sensor an der kleinen, insbesondere an einer kleinsten, Außenfläche des Fluoreszenzkörpers angeordnet.

Insbesondere ist der optische Sensor spaltfrei und/oder mittels eines Kontaktmittels, insbesondere als dünne Kontaktmittelschicht ausgeführt, an der kleinen oder kleinsten Außenfläche des Fluoreszenzkörpers angeordnet. Somit kann der optische Sensor das aus dem Fluoreszenzkörperinneren kommende, an der kleinen oder kleinsten Außenfläche und/oder an den Kanten auftreffende Fluoreszenzlicht, insbesondere verlustarm, aufnehmen. Wegen der Anordnung des optischen Sensors an der kleinen Außenfläche ist eine Effizienz der Detektion des Fluoreszenzlichts besonders hoch. Auch kann so eine Empfindlichkeit gegenüber Fremdlicht, das nicht aus der Flamme stammt und zu einer Verfälschung der Detektion führen könnte, reduziert oder ausgeschlossen werden.

Unter einer kleinsten Außenfläche des Fluoreszenzkörpers soll hier insbesondere eine flächenmäßig kleinste oder die kleinste unter den kleinen Außenflächen verstanden werden.

Insbesondere ist eine Detektorfläche des optischen Sensors im Wesentlichen genau so groß wie die kleine Außenfläche, an der er angeordnet ist. Damit ist gewährleistet, dass zumindest ein Großteil des an der kleinen Außenfläche aus dem Fluoreszenzkörper austretenden Fluoreszenzlichtes von der Detektorfläche aufgenommen und im Detektor detektiert wird. Unter "im Wesentlichen genau so groß" soll hier insbesondere verstanden werden, dass die Größe der Detektorfläche zumindest 70 %, bevorzugt zumindest 90 %, besonders bevorzugt zumindest 95 %, der Größe der kleinen Außenfläche beträgt. Insbesondere ist die Detektorfläche genau so groß wie die kleine Außenfläche.

Bei einer weiteren bevorzugten Ausgestaltung der Erfindung ist der Fluoreszenzkörper dazu ausgebildet, ein an der großen Außenfläche in den Fluoreszenzkörper eintretendes UV-Licht der Flamme in ein UV-A- und/oder ein sichtbares und/oder ein nahinfrarotes Fluoreszenzlicht zu wandeln, wobei das Fluoreszenzlicht an der kleinen, insbesondere an einer kleinsten, Außenfläche aus dem Fluoreszenzkörper austritt. Bevorzugt wandelt der Fluoreszenzkörper das UV-Licht der Flamme in ein sichtbares Fluoreszenzlicht.

Durch die Ausrichtung der großen Außenfläche zur Flamme und/oder zum Brennraum ist der Fluoreszenzkörper so angeordnet, dass möglichst viel Flammenlicht auf ihn und in ihn einstrahlt.

Der Fluoreszenzkörper ist so beschaffen, dass er ein kurzwelliges Flammenlicht im UV-Spektralbereich absorbiert und in ein langwelligeres Fluoreszenzlicht im UV-A- und/oder im sichtbaren und/oder im nahinfraroten Spektralbereich konvertiert. Bevorzugt konvertiert der Fluoreszenzkörper das Flammenlicht zu sichtbarem Fluoreszenzlicht.

Das Fluoreszenzlicht entsteht und strahlt innerhalb des Fluoreszenzkörpers. Je nach Auftreffwinkel des Fluoreszenzlichts von innen auf die Innenseiten der Außenflächen reflektiert das Fluoreszenzlicht an den verschiedenen Außenflächen und verbleibt im Fluoreszenzkörperinneren - dies wird von einem höheren Brechungsindex des Materials des Fluoreszenzkörpers begünstigt. Oder das Fluoreszenzlicht tritt aus dem Fluoreszenzkörper aus. Aufgrund der Geometrie des Fluoreszenzkörpers tritt das Fluoreszenzlicht bevorzugt an der kleinen oder kleinsten Außenfläche und/oder an den die kleine oder kleinste Außenfläche begrenzenden Kanten aus. Hier kann es von dem optischen Sensor aufgenommen werden. Der Brechungsindex des Materials ist insbesondere größer als ein Brechungsindex der Umgebung des Fluoreszenzkörpers.

Bei einer weiteren bevorzugten Ausgestaltung der Erfindung ist der optische Sensor ausgebildet, eine optische Größe im UV-A- und/oder sichtbaren und/oder nahinfraroten Spektralbereich des Fluoreszenzlichts zu messen.

Der optische Sensor ist nach Typ und Geometrie an ein Aufnehmen des Fluoreszenzlichts an der kleinen oder kleinsten Außenfläche angepasst. Der optische Sensor kann insbesondere nur das Fluoreszenzlicht erkennen und auswerten. Der optische Sensor ist vorteilhafterweise so am Fluoreszenzkörper angeordnet, dass von außen in den Fluoreszenzkörper eintretendes Licht ihn nicht erreichen kann, sondern nur innerhalb des Körpers entstehendes oder gestreutes Fluoreszenzlicht.

Als Abbild des Flammenlichts transportiert das Fluoreszenzlicht insbesondere, beispielsweise anhand von Intensität und/oder Farbe und/oder deren zeitlicher Schwankungen, Informationen über die Flammeneigenschaften und/oder Verbrennungseigenschaften der Flamme.

Bei einer weiteren bevorzugten Ausgestaltung der Erfindung ist der Fluoreszenzkörper ausgebildet, insbesondere ausschließlich, UV-Licht zu absorbieren und dieses in Fluoreszenzlicht zu wandeln, während Licht größerer Wellenlängen nicht absorbiert wird.

Insbesondere Licht mit Wellenlängen im Bereich des Fluoreszenzlichts wird nicht absorbiert oder nur geringfügig absorbiert. Somit ist gewährleistet, dass möglichst viel des Fluoreszenzlichts von dem optischen Sensor aufgenommen wird.

Nicht absorbiertes Licht, insbesondere alles Licht außer UV-Licht, tritt wieder aus dem Fluoreszenzkörper aus und gelangt nicht auf den optischen Sensor. Dadurch reagiert die Überwachungsvorrichtung insbesondere nicht auf Fremdlicht.

Bei einer weiteren bevorzugten Ausgestaltung der Erfindung ist der Fluoreszenzkörper ausgebildet, UV-Licht in einem ersten Spektralbereich, insbesondere bei 280 bis 330 Nanometern, bevorzugt bei 300 bis 320 Nanometer, besonders bevorzugt bei 310 Nanometer, zu absorbieren und dadurch erregtes Fluoreszenzlicht in einem zweiten Spektralbereich, vorzugsweise bei 400 bis 1100 Nanometer, abzustrahlen.

Der erste Spektralbereich tritt bevorzugt bei Flammen von verbrennendem Wasserstoff und/oder wasserstoffhaltigem Brenngas auf. Der langwelligere zweite Spektralbereich erlaubt die Verwendung kostengünstiger optischer Sensoren, wie beispielsweise Silizium-Fotodioden, zur Detektion des Fluoreszenzlichts.

Bevorzugt besteht die Platte aus einem Material, das fluoreszierende Eigenschaften hat. Geeignete Materialien sind generell optisch transparente Feststoffe, in die eine fluoreszierende Substanz eingemischt ist.

Bei einer weiteren bevorzugten Ausgestaltung der Erfindung ist der Fluoreszenzkörper als Lichtleiter und/oder als Fluoreszenzkonzentrator ausgebildet.

Unter einem Lichtleiter soll hier insbesondere ein langgestrecktes transparentes Bauteil verstanden werden, das Licht in seinem Inneren durch Reflexion an den Außenflächen vom Ort der Entstehung weiterleitet. Unter einem Fluoreszenzkonzentrator soll hier insbesondere ein Lichtleiter verstanden werden, der Flammenlicht über eine große Außenfläche aufnimmt, mittels Fluoreszenz in Fluoreszenzlicht wandelt, und das Fluoreszenzlicht in seinem Inneren durch Reflexion an den Innenseiten der Außenflächen vom Ort der Entstehung zur kleinen Außenfläche und zum optischen Sensor weiterleitet. Die Konzentration und Weiterleitung des Lichts von der großen Außenfläche zur kleinen Außenfläche wird durch den höheren Brechungsindex des Materials des Fluoreszenzkörpers begünstigt. Wegen der Konzentration kommen deutlich höhere Lichtintensitäten an der kleinen Außenfläche und/oder am optischen Sensor an, als bei einem vergleichbaren Sensor, der der großen Außenfläche zugewandt und/oder an der großen Außenfläche angeordnet ist.

Bei einer weiteren bevorzugten Ausgestaltung der Erfindung ist der Fluoreszenzkörper zumindest abschnittsweise, insbesondere spektral selektiv, spiegelnd beschichtet.

Die Konzentration des Lichts und Weiterleitung im Fluoreszenzkörper zur kleinen Außenfläche wird durch die spiegelnde Beschichtung begünstigt. Die spiegelnde Beschichtung verringert die Lichtverluste auf dem Weg zur kleinen Außenfläche.

Bei einer weiteren bevorzugten Ausgestaltung der Erfindung weist der Fluoreszenzkörper zumindest zwei Materialien auf, nämlich ein erstes Material und ein zweites Material, wobei das erste Material ein im ersten und/oder zweiten Spektralbereich optisch transparentes Trägermaterial umfasst, und wobei das zweite Material eine fluoreszierende Substanz umfasst. Das zweite Material ist in das erste Material, im Wesentlichen homogen, eingemischt.

Ein homogener Fluoreszenzkörper erfüllt die beiden Funktionen des Erzeugens von Fluoreszenzlicht und der Weiterleitung von Flammenlicht und Fluoreszenzlicht.

Unter einem Trägermaterial, auch Matrix genannt, kann insbesondere ein zumindest teilweise optisch transparenter Feststoff verstanden werden. Der Fluoreszenzkörper kann als erstes Material insbesondere einen transparenten Kunststoff, beispielsweise Polycarbonat oder Acrylglas, umfassen. Alternativ kann der Fluoreszenzkörper als erstes Material ein Silikatglas, Quarzglas oder Saphir umfassen. Als fluoreszierendes, zweites Material eignen sich, insbesondere im Falle einer Kunststoffmatrix, organische Farbstoffe oder Quantenpunkte. Beispielsweise ist entsprechend eingefärbtes Acrylglas kommerziell erhältlich. Für anorganisches Trägermaterial sind umgangssprachlich Phosphore genannte Leuchtstoffe, beispielsweise geeignet dotierte Granate, Orthosilikate, Aluminate oder Oxynitride, mögliche Optionen, die ein makroskopisch homogenes Gefüge mit dem Trägermaterial bilden. Ein oberflächliches Eindringen des Flammenlichts reicht bereits für die Erregung von Fluoreszenz aus. Eine Transparenz im ersten Spektralbereich ist insbesondere nicht erforderlich.

Ein hoher Brechungsindex des Fluoreszenzkörpermaterials ist von Vorteil, weil dann für zunehmend steile Strahlungswinkel die Bedingung für Totalreflexion erfüllt wird. Je höher der Brechungsindex, desto größere Anteile des isotrop generierten Fluoreszenzlichts bleiben in dem Körper gefangen und propagieren zu den Kanten hin.

Bei einer weiteren bevorzugten Ausgestaltung der Erfindung weist der Fluoreszenzkörper zumindest zwei Materialien auf, nämlich ein drittes Material und ein viertes Material, wobei das dritte Material ein im ersten und/oder zweiten Spektralbereich optisch transparentes Trägermaterial umfasst, und wobei das vierte Material eine fluoreszierende Substanz umfasst. Das vierte Material ist als fluoreszierende Schicht, insbesondere zumindest auf einer Seite, auf dem dritten Material aufgebracht.

Für das vierte Material empfiehlt sich eine Auswahl mit vergleichbarem Brechungsindex wie das dritte Material. Die fluoreszierende Schicht dient dem Erzeugen von Fluoreszenzlicht. Das Trägermaterial dient dem Weiterleiten von Flammenlicht und Fluoreszenzlicht.

Ist das Trägermaterial transparent im ersten Spektralbereich, beispielsweise Quarzglas oder Saphir, dann kann die fluoreszierende Schicht auf der der Flamme zugewandten oder abgewandten Seite des Trägermaterials aufgebracht sein. Bei nicht im ersten Spektralbereich transparentem Trägermaterial muss die fluoreszierende Schicht auf der der Flamme zugewandten Seite aufgebracht sein.

Wenn die Schicht einen vergleichbaren Brechungsindex wie das Trägermaterial aufweist, so bilden Schicht und Trägermaterial gemeinsam einen Lichtleiter. Fluoreszenzlicht entsteht zwar nur innerhalb der fluoreszierenden Schicht, dieses Fluoreszenzlicht propagiert aber ungehindert von der Grenzfläche der beiden Materialen durch den von ihnen gebildeten Körper. Vorteile dieser Variante sind, dass optisch, mechanisch und thermisch leistungsfähigere Materialien für das Trägermaterial genutzt werden können.

Bei einer weiteren bevorzugten Ausgestaltung der Erfindung sind ein Absorptionskoeffizient und/oder ein Streukoeffizient des Fluoreszenzkörpers im zweiten Spektralbereich möglichst klein und betragen jeweils bevorzugt weniger als 1/L, in Summe bevorzugt weniger als 2/L, so dass in dem Fluoreszenzkörper erzeugtes Fluoreszenzlicht, insbesondere auf dem Weg durch den Fluoreszenzkörper, möglichst wenig absorbiert und/oder gestreut wird. L ist die Länge des Fluoreszenzkörpers in Richtung des Sensors.

Bei einer weiteren bevorzugten Ausgestaltung der Erfindung ist der Fluoreszenzkörper freitragend ausgebildet.

Der Fluoreszenzkörper kann frei positioniert werden, unabhängig von beispielsweise Brennkammerwänden oder Sichtfenstern. Dieser Aufbau ist einfach und robust.

Bei einer weiteren bevorzugten Ausgestaltung der Erfindung ist die kleine Außenfläche zumindest dreimal, bevorzugt zumindest fünfmal, besonders bevorzugt zumindest zehnmal, kleiner als die große Außenfläche.

Durch ein Flächenverhältnis von großer Außenfläche zu kleiner Außenfläche größer oder gleich drei oder fünf oder zehn ergibt sich eine hohe Konzentration des Lichts. So kommt am optischen Sensor viel Fluoreszenzlicht an, das gut und mit einfachen Mitteln ausgewertet werden kann.

Bei einer weiteren bevorzugten Ausgestaltung der Erfindung ist der Fluoreszenzkörper von ebenen Außenflächen begrenzt, wobei die Außenflächen rechtwinklig aufeinanderstehen und wobei einander gegenüberliegende Außenflächen parallel zueinander sind.

Bei einem Fluoreszenzkörper mit ebenen Außenflächen lassen sich die Gesetze der geometrischen Optik bei der konstruktiven Auslegung leicht anwenden. Ein Fluoreszenzkörper mit ebenen Außenflächen lässt sich insbesondere leicht herstellen, bearbeiten und in einer Fassung fassen.

Wenn einander gegenüberliegende Außenflächen des Fluoreszenzkörpers parallel sind, tritt von außen eintretendes Licht an der gegenüberliegenden Außenfläche wieder aus, ohne nennenswert in innerhalb des Körpers geführte Moden zu koppeln. Nur im Körper selbst erzeugtes Fluoreszenzlicht wird zum optischen Sensor geleitet. Auch kann so eine Empfindlichkeit gegenüber Fremdlicht reduziert oder ausgeschlossen werden.

Bei einer weiteren bevorzugten Ausgestaltung der Erfindung weist der Fluoreszenzkörper, insbesondere entlang seiner Haupterstreckung aufeinander folgend, zumindest zwei Teilabschnitte auf, wobei ein erster Teilabschnitt im Sichtbereich der Flamme und insbesondere innerhalb des Brennraums angeordnet ist, und wobei ein zweiter Teilabschnitt außerhalb des Sichtbereichs der Flamme und insbesondere außerhalb des Brennraums angeordnet ist, wobei der optische Sensor an dem zweiten Teilabschnitt angeordnet ist.

Ein außerhalb des Sichtbereichs der Flamme angeordneter zweiter Teilabschnitt des Fluoreszenzkörpers ist geschützt vor Strahlung, Wärme und Abgasen der Flamme. Ebenso ist ein am zweiten Teilabschnitt angeordneter optischer Sensor mitsamt eventueller Betriebs- und Auswerteelektronik geschützt vor Strahlung, Wärme und Abgasen der Flamme. Ein solcher Sensor ist leichter zugänglich für Montage und Wartung. Bei dem Fluoreszenzkörper kann es sich um einen mit einem fluoreszierenden Substrat beschichteten Fluoreszenzkörper handeln. Die fluoreszierende Schicht kann am zweiten Teilabschnitt und somit außerhalb des Sichtbereichs, insbesondere außerhalb des Brennraums, angeordnet sein. Eine solche Schicht ist geschützt vor Strahlung, Wärme und Abgasen der Flamme. Ein außerhalb des Sichtbereichs der Flamme angeordneter zweiter Teilabschnitt, Sensor, Elektronik und fluoreszierende Schicht sind besonders langlebig.

Bei einer weiteren bevorzugten Ausgestaltung der Erfindung ist der Fluoreszenzkörper als Sichtfenster in den Brennraum ausgebildet. Dies ist insbesondere gut möglich, wenn der Fluoreszenzkörper nur UV-Licht absorbiert und für Licht anderer Wellenlängen, insbesondere für sichtbares Licht, transparent ist.

Bei einer weiteren bevorzugten Ausgestaltung der Erfindung umfasst die Überwachungsvorrichtung zumindest einen spektral selektiven Filter, wobei der Filter an einer der Flamme zugewandten Seite des Fluoreszenzkörpers und/oder an einem Sichtfenster in den Brennraum und/oder als ein zusätzliches Bauelement zwischen dem Fluoreszenzkörper und der Flamme angeordnet ist.

Der Filter kann insbesondere als Bandpass für den beobachteten UV-Spektralbereich (insbesondere 310 Nanometer) oder als Tiefpass, der nur Licht mit Wellenlängen unterhalb des sichtbaren Spektralbereichs durchlässt, wirken. Beides lässt sich durch dielektrische Interferenzfilter nach Stand der Technik erreichen.

Ein spektral selektiver Filter kann zusätzlich unerwünschtes Licht wie Fremdlicht, das nicht von der Flamme kommt oder nicht im UV-Spektralbereich liegt, reduzieren.

Bei einer weiteren bevorzugten Ausgestaltung der Erfindung umfasst der spektral selektive Filter einen Silberfilm mit einer Dicke von 20 bis 150 Nanometer, bevorzugt 40 bis 100 Nanometer. Eine Plasmakante von Silber wirkt dabei als effektiver Bandpassfilter für ein charakteristisches Emissionsspektrum von Wasserstoffflammen bei 310 Nanometer.

### Zeichnung

Weitere Ausgestaltungen und Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigt schematisch:
- Figur 1: eine erste Überwachungsvorrichtung
- Figur 2: eine zweite und dritte Überwachungsvorrichtung
- Figur 3: eine vierte Überwachungsvorrichtung
- Figur 4: eine fünfte Überwachungsvorrichtung
- Figur 5: eine sechste Überwachungsvorrichtung
- Figur 6: eine siebte Überwachungsvorrichtung.

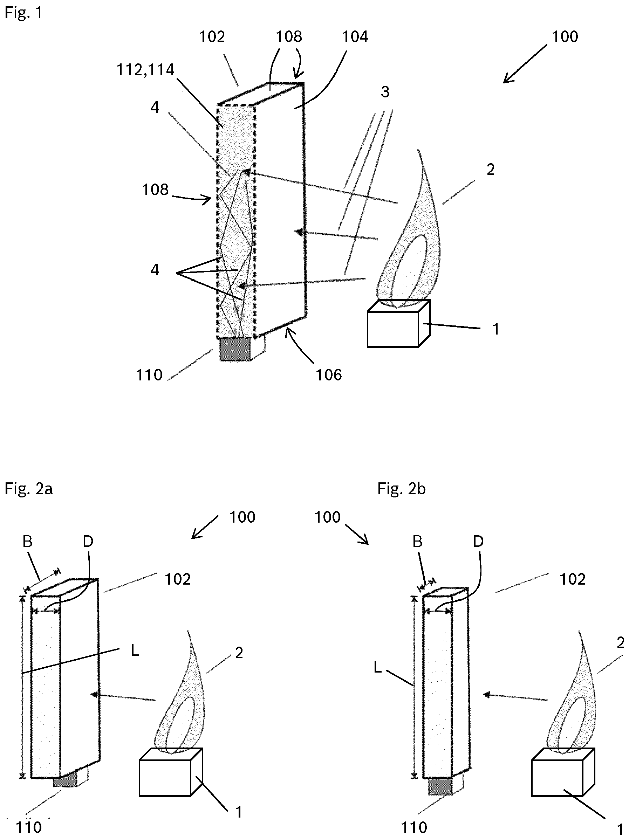

Figur 1 zeigt eine schematisch dargestellte erste Überwachungsvorrichtung 100 und eine an einem Brenner 1 brennende Flamme 2.

Die Überwachungsvorrichtung 100 umfasst einen plattenförmigen Fluoreszenzkörper 102 (hier in Längsrichtung aufgeschnitten dargestellt) mit einer großen Außenfläche 104 und einer kleinen Außenfläche 106. Der Fluoreszenzkörper 102 ist im Sichtbereich der Flamme 2 angeordnet. Die große Außenfläche 104 ist der Flamme 2 zugewandt. Die kleine Außenfläche 106 grenzt an die große Außenfläche 104 an und ist einem optischen Sensor 110 zugewandt. Der optische Sensor 110 ist an der kleinen Außenfläche 106 angeordnet. Der Fluoreszenzkörper 102 ist von ebenen Außenflächen 104, 106, 108 begrenzt. Die Außenflächen 104, 106, 108 stehen rechtwinklig aufeinander, einander gegenüberliegende Außenflächen sind parallel zueinander. Der Fluoreszenzkörper 102 ist hier als freitragend dargestellt, er kann - gegebenenfalls mittels einer Fassung oder eines Rahmens gefasst - frei im Raum angeordnet sein. Der Fluoreszenzkörper 102 weist zumindest zwei Materialien 112, 114, nämlich ein erstes Material 112 und ein zweites Material 114 auf. Das erste Material 112 umfasst ein im ersten und/oder zweiten Spektralbereich optisch transparentes Trägermaterial. Das zweite Material 114 umfasst eine fluoreszierende Substanz. Das zweite Material 114 ist homogen in das erste Material 112 eingemischt.

Die Flamme 2 ist hier schematisch dargestellt; beispielsweise kann es sich dabei um eine Einzelflamme 2 an einer Brennerdüse 1 oder um einen Flammenteppich 2 eines Flächenbrenners 1 eines Heizgerätes (nicht dargestellt) handeln. Die Flamme 2 sendet im Brennerbetrieb Flammenlicht 3 im ultravioletten Spektralbereich aus. Das Flammenlicht 3 strahlt über die große Außenfläche 104 in den Fluoreszenzkörper 102 ein. Der Fluoreszenzkörper 102 absorbiert das UV-Licht 3 und wandelt es in Fluoreszenzlicht 4 von größerer Wellenlänge um. Das Fluoreszenzlicht 4 breitet sich auch aufgrund von Reflexion an den Innenseiten der Außenflächen 104, 106, 108 im Fluoreszenzkörper 102 aus und gelangt konzentriert zur kleinen Außenfläche 106, wo es aus dem Fluoreszenzkörper 102 austritt und von dem optischen Sensor 110 detektiert wird.

Das Fluoreszenzlicht 4 tritt insbesondere aufgrund seiner kleinen Auftreffwinkel zur Normalen der kleinen Außenfläche 106 an der kleinen Außenfläche 106 aus dem Fluoreszenzkörper 102 aus. Diese kleinen Auftreffwinkel ergeben sich insbesondere aus der Orthogonalität der Außenflächen des Fluoreszenzkörpers 102.

Das UV-Licht 3 der Flamme 2 dringt in den plattenförmigen Fluoreszenzkörper 102 ein, der für das entstehende Fluoreszenzlicht 4 transparent ist. Aufgrund des im Vergleich zur Umgebung höheren Brechungsindex des Materials 112, 114 des Fluoreszenzkörpers 102 bleibt ein Großteil des Fluoreszenzlichts 4 im Fluoreszenzkörper 102 gefangen und wird wie in einem Wellenleiter zur kleinen Außenfläche 106 und den sie begrenzenden Kanten geführt, wo es von einem optischen Sensor 110, beispielsweise eine Photodiode 110, detektiert wird.

Figur 2a zeigt eine schematisch dargestellte zweite Überwachungsvorrichtung 100 und eine an einem Brenner 1 brennende Flamme 2. Figur 2b zeigt eine schematisch dargestellte dritte Überwachungsvorrichtung 100 und eine an einem Brenner 1 brennende Flamme 2.

Der Fluoreszenzkörper 102 in Figur 2a weist eine plattenförmige Gestalt auf. Die Länge L und Breite B sind deutlich größer als die Dicke D des Fluoreszenzkörpers 102. Der Fluoreszenzkörper 102 in Figur 2b weist eine stabförmige Gestalt auf. Die Länge L ist deutlich größer als die Breite B und die Dicke D des Fluoreszenzkörpers 102.

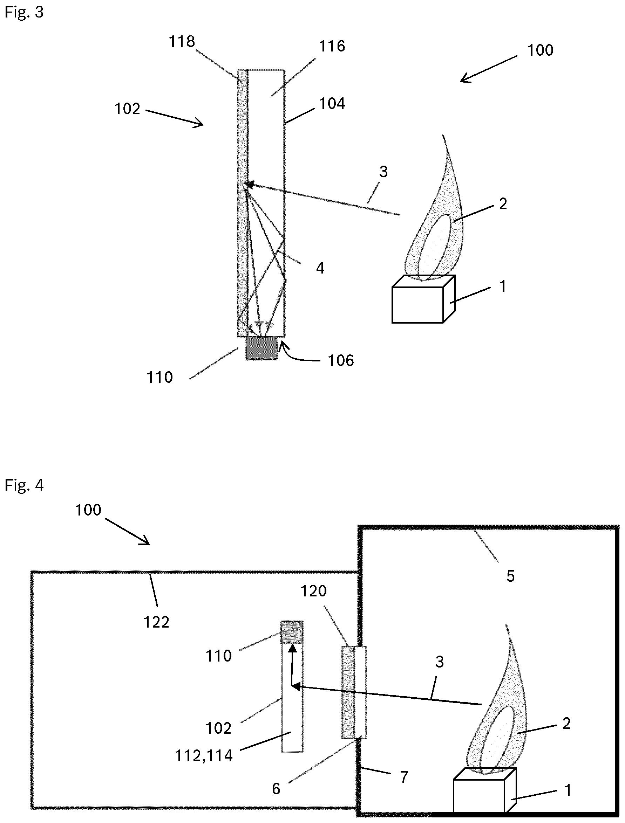

Figur 3 zeigt eine schematisch dargestellte vierte Überwachungsvorrichtung 100 und eine an einem Brenner 1 brennende Flamme 2.

Der Fluoreszenzkörper 102 weist zumindest zwei Materialien 116, 118, nämlich ein drittes Material 116 und ein viertes Material 118 auf. Das dritte Material 116 umfasst ein im ersten und/oder zweiten Spektralbereich optisch transparentes Trägermaterial. Das vierte Material 118 umfasst eine fluoreszierende Substanz. Das vierte Material 118 ist als Schicht auf dem dritten Material 116 aufgebracht. Die Flamme 2 sendet Flammenlicht 3 im ultravioletten Spektralbereich aus. Das Flammenlicht 3 strahlt auf die große Außenfläche 104 und durch das transparente Trägermaterial 116 auf die fluoreszierende Schicht 118. Die fluoreszierende Schicht 118 absorbiert das UV-Licht 3 und wandelt es in Fluoreszenzlicht 4 von größerer Wellenlänge um. Das Fluoreszenzlicht 4 breitet sich auch aufgrund von Reflexion im Fluoreszenzkörper 102, insbesondere im Trägermaterial 116 und/oder in der fluoreszierenden Schicht 118, aus und gelangt konzentriert zur kleinen Außenfläche 106, wo es aus dem Fluoreszenzkörper 102 austritt und von dem optischen Sensor 110 detektiert wird.

Figur 4 zeigt eine schematisch dargestellte fünfte Überwachungsvorrichtung 100, eine an einem Brenner 1 brennende Flamme 2 in einer Brennkammer 5 und ein Sichtfenster 6 in einer der Brennkammerwände 7.

Der Fluoreszenzkörper 102 ist im Sichtbereich der Flamme 2 angeordnet. Das Flammenlicht 3 strahlt durch das Sichtfenster 6 auf/in den Fluoreszenzkörper 102, wo es in Fluoreszenzlicht 4 umgewandelt wird, welches von dem optischen Sensor 110 detektiert wird. Das Sichtfenster 6 weist einen spektral selektiven Filter 120 auf.

Der spektral selektive Filter 120 kann zusätzlich unerwünschtes Licht reduzieren, das nicht von der Flamme 2 stammt oder nicht im UV-Spektralbereich liegt. Eingezeichnet ist hier auch eine zusätzliche Abschirmung 122 um den Fluoreszenzkörper 102 und den optischen Sensor 110, die Umgebungslicht abhält.

Die thermischen Anforderungen an das Material 112, 114, 116, 118 des Fluoreszenzkörpers 102 sinken bei einer außerhalb der Brennkammer 5 angeordneten Überwachungsvorrichtung 100 beträchtlich.

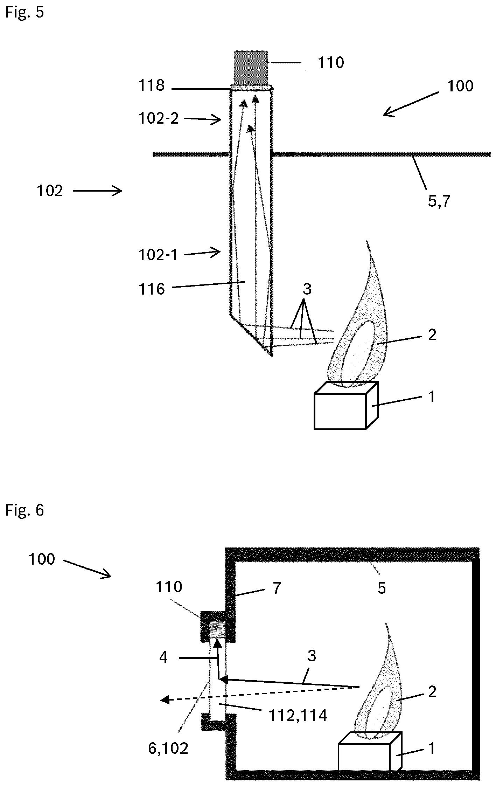

Figur 5 zeigt eine schematisch dargestellte sechste Überwachungsvorrichtung 100, eine Flamme 2 und eine Brennkammerwand 7 einer Brennkammer 5.

Der Fluoreszenzkörper 102 weist zumindest zwei Teilabschnitte 102-1, 102-2 auf. Ein erster Teilabschnitt 102-1 ist im Sichtbereich der Flamme 2 und insbesondere innerhalb der Brennkammer 5 angeordnet. Ein zweiter Teilabschnitt 102-2 ist außerhalb des Sichtbereichs der Flamme 2 und insbesondere außerhalb der Brennkammer 5 angeordnet. Der erste Teilabschnitt 102-1 weist eine Einkoppelstruktur auf, um das Flammenlicht 3 und/oder Fluoreszenzlicht 4 in Richtung der fluoreszierenden Schicht 118 und/oder des optischen Sensors 110 zu leiten (reflektieren).

Der Fluoreszenzkörper 102 weist zumindest zwei Materialien 116, 118, nämlich ein drittes Material 116 und ein viertes Material 118 auf. Das dritte Material 116 umfasst ein optisch transparentes Trägermaterial. Das vierte Material 118 umfasst eine fluoreszierende Substanz, wobei das vierte Material 118 als Schicht auf dem dritten Material 116 aufgebracht ist.

Alternativ kann der Fluoreszenzkörper 102 auch ein homogen in ein erstes Material (Trägermaterial) 112 eingemischtes zweites Material (Fluoreszenzmaterial) 114 umfassen.

Die fluoreszierende Schicht 118 ist am zweiten Teilabschnitt 102-2 des Fluoreszenzkörpers 102 aufgetragen. Auch der optische Sensor 110 ist an dem zweiten Teilabschnitt 102-2, insbesondere an der fluoreszierenden Schicht 118, angeordnet.

Figur 6 zeigt eine schematisch dargestellte siebte Überwachungsvorrichtung 100, eine Flamme 2 in einer Brennkammer 5 und ein Sichtfenster 6 in einer der Brennkammerwände 7.

Der Fluoreszenzkörper 102 ist als Sichtfenster 6 in die Brennkammer 5 ausgebildet. Der Fluoreszenzkörper 102 absorbiert nur den UV-Anteil im Flammenlicht 3 und wandelt es in Fluoreszenzlicht 4 um. Insbesondere sichtbares Licht (Pfeil mit gestrichelter Linie) strahlt aus der Brennkammer 5 durch den Fluoreszenzkörper 102 nach außen, so dass ein Inneres der Brennkammer 5 und die Flamme 2 für einen Beobachter außerhalb der Brennkammer 5 sichtbar sind (sofern die Flamme 2 überhaupt sichtbares Licht ausstrahlt).

Für den Fluoreszenzkörper 102 bietet sich ein Aufbau aus zumindest zwei Materialien 112, 114 an. Das erste Material 112 umfasst ein im ersten und/oder zweiten Spektralbereich optisch transparentes Trägermaterial 112. Das zweite Material 114 umfasst eine fluoreszierende Substanz 114, wobei das zweite Material 114 in das erste Material 112, vorzugsweise homogen, eingemischt ist.

## Patentansprüche

1. Überwachungsvorrichtung (100) zum Überwachen einer in einem Brennraum eines mit einem Brenngas/Luft-Gemisch gefeuerten Heizgerätes brennenden Flamme (2),
• **gekennzeichnet durch** einen im Sichtbereich der Flamme (2) angeordneten Fluoreszenzkörper (102) von plattenförmiger oder stabförmiger Gestalt,
• wobei der Fluoreszenzkörper (102) zumindest teilweise für ein im/am Fluoreszenzkörper (102) entstehendes Fluoreszenzlicht (4) transparent ist und
• zumindest eine große Außenfläche (104) sowie zumindest eine kleine Außenfläche (106) aufweist,
• wobei die kleine Außenfläche (106) kleiner als die große Außenfläche (104) ist und an die große Außenfläche (104) angrenzt,
• wobei die große Außenfläche (104) der Flamme (2) zugewandt ist und
• wobei die kleine Außenfläche (106) einem optischen Sensor (110) zum Erfassen zumindest einer optischen Eigenschaft des Fluoreszenzlichts (4) zugewandt ist.

2. Überwachungsvorrichtung (100) nach Anspruch 1,
wobei der optische Sensor (110) an der kleinen, insbesondere an einer kleinsten, Außenfläche (106) angeordnet ist.

3. Überwachungsvorrichtung (100) nach einem der vorhergehenden Ansprüche, wobei der Fluoreszenzkörper (102) dazu ausgebildet ist, ein an der großen Außenfläche (104) in den Fluoreszenzkörper (102) eintretendes UV-Licht (3) der Flamme (2) in ein UV-A- und/oder sichtbares und/oder nahinfrarotes Fluoreszenzlicht (4) zu wandeln, wobei das Fluoreszenzlicht (4) an der kleinen Außenfläche (106) aus dem Fluoreszenzkörper (102) austritt.

4. Überwachungsvorrichtung (100) nach einem der vorhergehenden Ansprüche, wobei der optische Sensor (110) ausgebildet ist, eine optische Größe im UV-A- und/oder sichtbaren und/oder nahinfraroten Spektralbereich des Fluoreszenzlichts (4) zu messen.

5. Überwachungsvorrichtung (100) nach einem der vorhergehenden Ansprüche, wobei der Fluoreszenzkörper (102) ausgebildet ist, insbesondere ausschließlich, UV-Licht (3) zu absorbieren und dieses in Fluoreszenzlicht (4) zu wandeln, während Licht größerer Wellenlängen nicht absorbiert wird.

6. Überwachungsvorrichtung (100) nach einem der vorhergehenden Ansprüche, wobei der Fluoreszenzkörper (102) ausgebildet ist, UV-Licht (3) in einem ersten Spektralbereich, insbesondere bei 280 bis 330 Nanometern, bevorzugt bei 300 bis 320 Nanometer, besonders bevorzugt bei 310 Nanometer, zu absorbieren und dadurch erregtes Fluoreszenzlicht (4) in einem zweiten Spektralbereich, insbesondere bei 400 bis 1100 Nanometern, abzustrahlen.

7. Überwachungsvorrichtung (100) nach einem der vorhergehenden Ansprüche, wobei der Fluoreszenzkörper (102) als Lichtleiter und/oder als Fluoreszenzkonzentrator ausgebildet ist.

8. Überwachungsvorrichtung (100) nach einem der vorhergehenden Ansprüche, wobei der Fluoreszenzkörper (102) zumindest abschnittsweise spektral selektiv spiegelnd beschichtet ist.

9. Überwachungsvorrichtung (100) nach Anspruch 6,
wobei der Fluoreszenzkörper (102) zumindest zwei Materialien (112, 114), nämlich ein erstes Material (112) und ein zweites Material (114) aufweist, wobei das erste Material (112) ein im ersten und/oder zweiten Spektralbereich optisch transparentes Trägermaterial umfasst, und wobei das zweite Material (114) eine fluoreszierende Substanz umfasst, wobei das zweite Material (114) in das erste Material (112), im Wesentlichen homogen, eingemischt ist.

10. Überwachungsvorrichtung (100) nach Anspruch 6,
wobei der Fluoreszenzkörper (102) zumindest zwei Materialien (116, 118), nämlich ein drittes Material (116) und ein viertes Material (118) aufweist, wobei das dritte Material (116) ein im ersten und/oder zweiten Spektralbereich optisch transparentes Trägermaterial umfasst, und wobei das vierte Material (118) eine fluoreszierende Substanz umfasst, wobei das vierte Material (118) als Schicht auf dem dritten Material (116) aufgebracht ist.

11. Überwachungsvorrichtung (100) nach Anspruch 6,
wobei ein Absorptionskoeffizient und/oder ein Streukoeffizient des Fluoreszenzkörpers (102) im zweiten Spektralbereich möglichst klein ist und bevorzugt kleiner 1/L beträgt, so dass in dem Fluoreszenzkörper (102) erzeugtes Fluoreszenzlicht (4) möglichst wenig absorbiert und/oder gestreut wird, wobei L die Länge des Fluoreszenzkörpers (102) in Richtung des optischen Sensors (110) ist.

12. Überwachungsvorrichtung (100) nach einem der vorhergehenden Ansprüche, wobei der Fluoreszenzkörper (102) freitragend ausgebildet ist.

13. Überwachungsvorrichtung (100) nach einem der vorhergehenden Ansprüche, wobei die kleine Außenfläche (106) zumindest dreimal, bevorzugt zumindest fünfmal, besonders bevorzugt zumindest zehnmal, kleiner als die große Außenfläche (104) ist.

14. Überwachungsvorrichtung (100) nach einem der vorhergehenden Ansprüche, wobei der Fluoreszenzkörper (102) von ebenen Außenflächen (104, 106, 108) begrenzt ist, wobei die Außenflächen (104, 106, 108) rechtwinklig aufeinanderstehen und wobei einander gegenüberliegende Außenflächen (104, 106, 108) parallel zueinander sind.

15. Überwachungsvorrichtung (100) nach einem der vorhergehenden Ansprüche, wobei der Fluoreszenzkörper (102) zumindest zwei Teilabschnitte (102-1, 102-2) aufweist, wobei ein erster Teilabschnitt (102-1) im Sichtbereich der Flamme (2) und insbesondere innerhalb des Brennraums (5), und wobei ein zweiter Teilabschnitt (102-2) außerhalb des Sichtbereichs der Flamme (2) und insbesondere außerhalb des Brennraums (5) angeordnet ist, wobei der optische Sensor (110) an dem zweiten Teilabschnitt (102-2) angeordnet ist.

16. Überwachungsvorrichtung (100) nach einem der vorhergehenden Ansprüche, wobei der Fluoreszenzkörper (102) als Sichtfenster (6) in den Brennraum (5) ausgebildet ist.

17. Überwachungsvorrichtung (100) nach einem der vorhergehenden Ansprüche, umfassend zumindest einen spektral selektiven Filter (120), wobei der Filter (120) an einer der Flamme (2) zugewandten Seite des Fluoreszenzkörpers (102) und/oder an einem Sichtfenster (6) in den Brennraum (5) und/oder als ein zusätzliches Bauelement zwischen dem Fluoreszenzkörper (102) und der Flamme (2) angeordnet ist.

18. Überwachungsvorrichtung (100) nach Anspruch 17,
wobei der spektral selektive Filter (120) einen Silberfilm mit einer Dicke im Bereich von 20 bis 150 Nanometer, bevorzugt 40 bis 100 Nanometer, umfasst.
